## Europäisches Patentamt

## European Patent Office

## Office européen des brevets

(19)

(11) Veröffentlichungsnummer: **0 088 201**

**B1**

(12) # EUROPÄISCHE PATENTSCHRIFT

(45) Veröffentlichungstag der Patentschrift:
**15.01.86**

(51) Int. Cl.⁴: **B 21 B 1/34**, B 23 D 25/12

(21) Anmeldenummer: **82890183.5**

(22) Anmeldetag: **15.12.82**

(54) **Anlage zum Warmwalzen von band- oder tafelförmigem Walzgut.**

(30) Priorität: **05.03.82  AT 870/82**

(43) Veröffentlichungstag der Anmeldung:
**14.09.83 Patentblatt 83/37**

(45) Bekanntmachung des Hinweises auf die Patenterteilung:
**15.01.86 Patentblatt 86/3**

(84) Benannte Vertragsstaaten:
**DE FR GB IT**

(56) Entgegenhaltungen:
**AT-B-222 076**
**DE-A-2 559 222**
**DE-A-3 030 382**
**FR-A-1 367 812**
**US-A-1 918 968**
**US-A-2 076 969**

(73) Patentinhaber: **VOEST- ALPINE Aktiengesellschaft, Werksgelände, A-4010 Linz (AT)**

(72) Erfinder: *Der Erfinder hat auf seine Nennung verzichtet*

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

**Beschreibung**

Die Erfindung bezieht sich auf eine Anlage zum Warmwalzen von band- oder tafelförmigem Walzgut mit wenigstens einem zwischen einem vorderen und einem hinteren Reversierhaspel vorgesehenen, reversierbaren Fertiggerüst und mit einer in einer Linie mit den Reversierhaspeln und dem Fertiggerüst angeordneten Schopfschere, die eine obere und eine untere Messerwalze aufweist. Hierbei handelt es sich nach Kenntnis der Anmelderin um ausgeführte Walzanlagen, die nicht druckschriftlich belegbar sind.

Da das zu walzende Band nur dann störungsfrei in ein Walzgerüst eingeführt werden kann, wenn der Bandanfang bzw. das Bandende entsprechend ausgebildet ist, werden in bekannten Walzanlagen dieser Art sogenannte Schopfscheren eingesetzt, die den Bandanfang bzw. das Bandende entsprechend beschneiden. Um das Walzgut zum Beschneiden nicht abbremsen zu müssen, werden die Schopfscheren mit Messerwalzen ausgerüstet, die mit einer an die Walzgutgeschwindigkeit angepaßten Umfangsgeschwindigkeit angetrieben werden können, so daß während des Schnittes die Messer der Schere mit dem Walzgut mitbewegt werden können.

Bei üblichen Anordnungen wird die Schopfschere vor dem vorderen Reversierhaspel für das Fertiggerüst angeordnet. Diese Scherenanordnung hat jedoch den Nachteil, daß bei einer nicht günstigen Schopfausbildung am Bandanfang oder -ende während der Fertigstiche das Warmband nicht mehr beschnitten werden kann. Dies wäre nur möglich, wenn die Schopfschere zwischen dem Reversiergerüst und dem Reversierhaspel angeordnet werden könnte, was bei den bekannten Schopfscheren jedoch nicht der Fall ist, weil im Bereich der Schopfschere keine Abstützungsmöglichkeit für das Warmband vorhanden ist und im Gerüstbereich große Abstände für die Rollgangsrollen konstruktionsbedingt sind.

Bei einer nicht reversierbaren Fertigwalzstraße ist es zwar bekannt (DE-A-3 030 382), das in einer Vorwalzstraße vorgewalzte Band auf einem Haspel aufzuwickeln und nach einem seitlichen Verschieben des Haspels einer seitlich neben der Vorwalzstraße angeordneten, gegensinnig zu durchlaufenden Fertigwalzstraße zuzuführen, wobei zwischen dem Haspel und der Fertigwalzstraße eine Schopfschere angeordnet ist, doch kann eine solche Schopfscherenanordnung bei nicht reservierbaren Fertigwalzstraßen keine Lösung für das bei Revesiergerüsten anstehende Problem nahelegen, weil die bekannten Schopfscheren eben keine Unterstützung des Bandes erlauben, so daß für eine ausreichende Bandunterstützung eine entsprechende Rollgangslänge vor und hinter der Schere erforderlich wird, was den Abstand zwischen dem Reversierhaspel und dem Fertiggerüst auf ein nicht tragbares Maß erhöht.

Um zwischen zwei einer Querteilanlage mit rotierenden Messerwalzen vor- und nachgeordnete Bandführungen eine zusätzliche Bandunterstützung sicherzustellen, ist es bekannt (FR-A-1 367 812), die Messerwelle unterhalb des Banddurchlaufes mit einer tangentialen Stützfläche zu versehen, die mit der Messerwelle gegen die Bandunterseite angestellt werden kann. Diese Konstruktion bedingt wegen der der Höhe nach verstellbaren Lagerung der unteren Messerwalze einen erheblichen Aufwand mit dem Nachteil, daß wegen der tangential verlaufenden Stützfläche eine genaue Drehstellung der Messerwalze für ein flächiges Abstützen des Bandes zwingend vorausgesetzt werden muß. Abgesehen davon, daß auf Grund der vor- und nachgeordneten Bandführungen eine solche Schere nicht als Schopfschere eingesetzt werden kann, wird durch die vor- und nachgeordneten Bandführungen die Abstützlänge für das Band in einer Weise verlängert, die eine Vergrößerung des Abstandes zwischen den dieser Schere vor und nachgeordneten Bearbeitungseinheiten ergibt.

Der Erfindung liegt somit die Aufgabe zugrunde, diese Mängel zu vermeiden und eine Anlage zum Warmwalzen von band- oder tafelförmigem Walzgut der eingangs geschilderten Art so zu verbessern, daß bei einem Auftreten von ungünstigen Schopfausbildungen das Band auch zwischen den Fertigstichen geschopft werden kann.

Die Erfindung löst die gestellte Aufgabe dadurch, daß die Schopfschere zwischen dem Fertiggerüst und vorzugsweise dem hinteren Reversierhaspel vorgesehen ist und daß auf der unteren Messerwalze der Schopfschere eine achsparallele Stützrolle für das Walzgut drehbar gelagert ist.

Durch das Vorsehen einer auf der unteren Messerwalze gelagerten Stützrolle für das Walzgut kann das Walzgut auch im Bereich der Schopfschere gut geführt werden, ohne daß der Scherenbetrieb behindert wird. Wird nämlich für den Schneidvorgang die untere Messerwalze angetrieben, so wird die Stützrolle mit der Messerwalze aus dem Bereich des Walzgutes herausgedreht, um Platz für den Messereingriff zu schaffen. Unmittelbar nach dem Schnitt gelangt die Stützrolle nach einer vollen Umdrehung der Messerwalze wieder in den Bereich des Walzgutes, das nach dem Schnitt in gleicher Weise wie vorher geführt werden kann. Die Anordnung der Schopfschere ist folglich nicht an eine möglichst nahe an die Schopfschere heranreichende Abstützung und Führung des Walzgutes gebunden, so daß die Schopfschere auch zwischen dem Reversierhapsel und dem Fertiggerüst angeordnet werden kann, ohne den Abstand zwischen dem Reversierhaspel und dem Gerüst in unerwünschter Weise entscheidend vergrößern zu müssen Damit ist ein Beschneiden des Warmbandes auch zwischen den einzelen Fertigstichen mÖglich, und zwar sowohl am Bandanfang als auch am Bandende.

Besondere Vorteile bietet dabei die Anordnung der Schopfschere zwischen dem hinteren Reversierhaspel und em vorgeordneten Fertigerüst, weil mit der dem Fertigerüst nachgeordneten Schopfschere auch das vordere und hintere Ende des fertiggewalzten Bandes beschnitten werden kann, was sonst nur mit einer gesonderten Schere ermÖglicht wird.

Die Stützrolle auf der unteren Messerwalze der Schopfschere kann in gleicher Weise wie die übrigen Rollen des für den Walzguttransport vorgesehenen Rollganges ausgebildet werden. Um bezüglich der Rollgangsrollen keinen Unterschied zu machen, kann die Stützrolle auch angetrieben werden. Wegen der Stützrollenlagerung auf der Messerwalze und der Messerwalzendrehung wÄhrend des Schneidvorganges muß der Antrieb der Stützrolle jedoch über eine Gelenkwelle erfolgen. Damit die Gelenkwelle nicht teleskopisch ausgebildet werden muß, kann die Stützrolle in weiterer Ausbildung der Erfindung über eine Gelenkwelle mit einer zur Messerwalze koaxialen Antriebswelle verbunden werden. Da die Antriebswelle koaxial zur Drehachse der Messerwalze verlÄuft, wird die Gelenkwelle bei einer Verdrehung der Messerwalze entlang eines geraden Kreiskegels bewegt, so daß keine LÄngenÄnderung erforderlich ist.

In der Zeichnung ist der Erfindungsgegenstand beispielsweise dargestellt. Es zeigen

Fig. 1 eine Anlage zum Warmwalzen von band- oder tafelfÖrmigem Walzgut in einer schematischen Seitenansicht,

Fig. 2 einen LÄngsschnitt durch die untere Messerwalze der Schopfschere in einem grÖßeren Maßstab und

Fig. 3 einen Schnitt nach der Linie III-III der Fig.2.

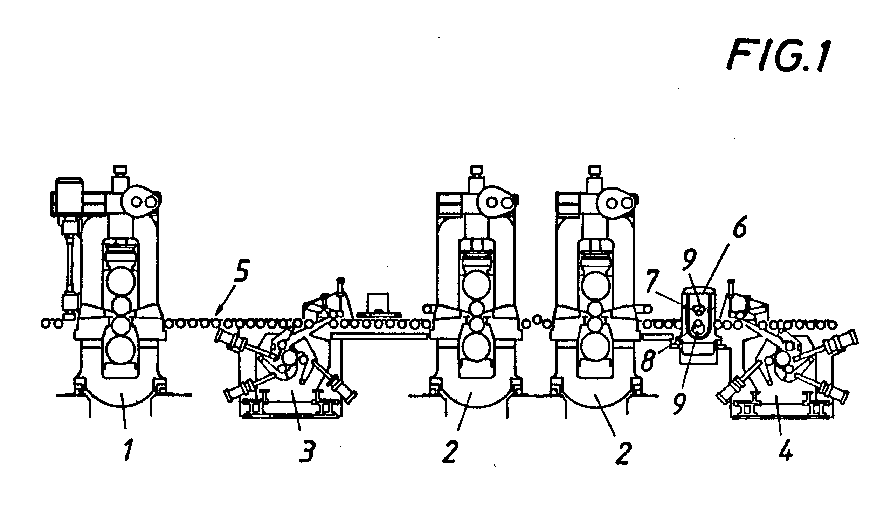

GemÄß der Fig. 1 besteht die dargestellte Anlage zum Warmwalzen von band- oder tafelfÖrmigem Walzgut aus einem Vorgerüst 1 und zwei unmittelbar hintereinander angeordneten Fertiggerüsten 2, denen ein als Warmhaspel ausgebildeter Reversierhaspel 3 vorgeordnet und ein gleich aufgebauter Reversierhaspel 4 nachgeordnet ist. Die Anordnung ist dabei so getroffen, daß das Vorgerüst 1 so nah wie mÖglich an den Reversierhaspel 3 herangerückt ist, damit die Gerüste 1 und 2 von einem wahlweisen Einzelbetrieb auf einen gemeinsamen Betrieb bzw. einen Tandembetrieb umgestellt werden kÖnnen.

Damit das zu walzende Band, das auf einem Rollgang 5 durch die Walzanlage gefÖrdert wird, auch zwischen den einzelnen Fertigstichen der Fertiggerüste 2 beschnitten werden kann, um ungünstige Schopfausbildungen beim Fertigwalzen berücksichtigen zu kÖnnen, ist zwischen dem hinteren der beiden Fertiggerüste 2 und dem hinteren Reversierhaspel 4 eine Schopfschere 6 vorgesehen, die eine obere und eine untere Messerwalze 7 und 8 aufweist. Diese jeweils mit einem Messer 9 bestückten Messerwalzen 7 und 8 kÖnnen mit einer an die Durchlaufgeschwindigkeit des Walzgutes angepaßten Umfangsgeschwindigkeit angetrieben werden, so daß die Messer 9 wÄhrend des Schnittes mit dem Walzgut mitbewegt werden.

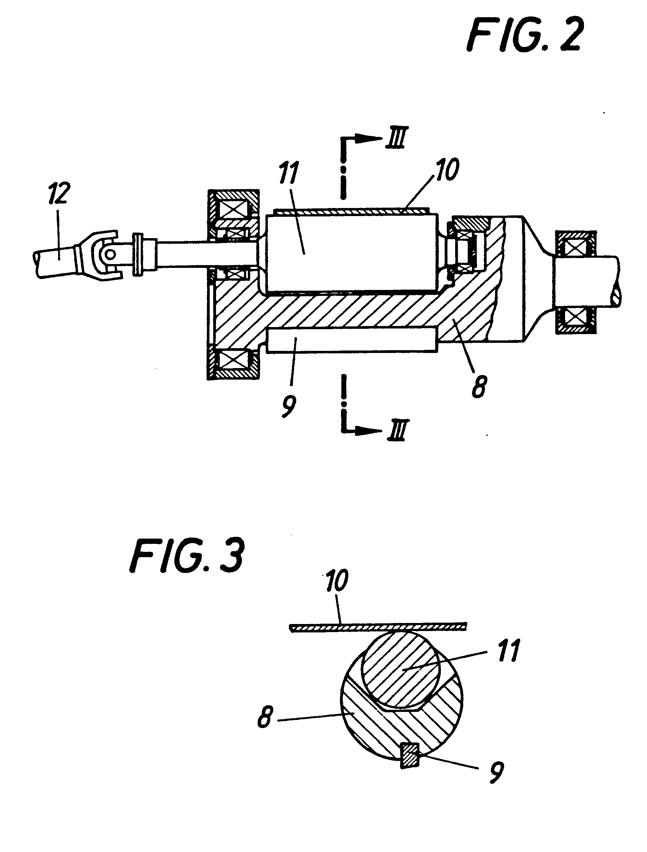

Um im Bereich der Schopfschere 6 eine hinsichtlich des Rollganges 5 gleichwertige Führung für das Warmband 10 zu erhalten, was bei einer Scherenanordnung im unmittelbaren Anschluß an ein Fertiggerüst von besonderer Bedeutung ist, ist auf der unteren Messerwalze 8 eine Stützrolle 11 für das Warmband 10 drehbar gelagert. Diese Stützrolle 11 kann entsprechend den Rollen des Rollganges 5 ausgebildet werden und liegt vorzugsweise diametral gegenüber dem Messer 9 der Messerwalze 8. In der Ruhestellung der Schopfschere befindet sich demnach die Stützrolle 11 in ihrer in den Fig. 2 und 3 dargestellten Arbeitslage. Werden die Messerwalzen 7 und 8 für einen Schopfvorgang angetrieben, so wird die Stützrolle 11 bei der Drehung der Messerwalze 8 aus dem Bereich des Warmbandes 10 nach unten weggedreht, um Platz für den Messereingriff zu machen. Nach einer vollen Umdrehung der Messerwalze 8 wird wiederum die Arbeitslage der Stützrolle 11 erreicht. Mit der zusÄtzlichen Abstützung des Warmbandes 10 durch die Stützrolle 11 wird die problemlose Anordnung der Schopfschere 6 zwischen den Fertiggerüsten 2 und einem der Reversierhaspel 3 oder 4 ermÖglicht, ohne daß der Abstand zwischen Fertiggerüst und Reversierhaspel wesentlich vergrÖßert werden müßte, weil die Stützrolle 11 als Rolle des Rollganges zwischen dem hinteren Reversierhaspel 4 und dem vorgeordneten Fertiggerüst den sonst durch die Schere vorgegebenen Abstand überbrückt.

Obwohl mit der Anordnung der Schopfschere 6 zwischen dem vorderen Reversierhaspel 3 und dem anschließenden Fertiggerüst 2 eine Beschneidung des Warmbandes zwischen den einzelnen Fertigstichen mÖglich wÄre, ergibt sich bei einer Anordnung der Schopfschere zwischen den Fertiggerüsten 2 und dem hinteren Reversierhaspel 4 der zusÄtzliche Vorteil, daß auch das bereits fertiggewalzte Band an seinem vorderen und hinteren Ende beschnitten werden kann.

Wie der Fig. 2 entnommen werden kann, ist die Stützrolle 11 auch über eine Gelenkwelle 12 angetrieben. Ist dabei die Gelenkwelle 12 mit einer zur Messerwalze 8 koaxialen Antriebswelle verbunden, so ergibt sich bei einer Verdrehung der Messerwalze 8 keine LÄngen-Änderung für die Gelenkwelle 12, was besonders einfache KonstruktionsverhÄltnisse sicherstellt.

## Patentansprüche

1. Anlage zum Warmwalzen von band- oder tafelförmigem Walzgut mit wenigstens einem zwischen einem vorderen und einem hinteren Reversierhaspel (3, 4) vorgesehenen, reversierbaren Fertiggerüst (2) und mit einer in einer Linie mit den Reversierhaspeln (3, 4) und dem Fertiggerüst (2) angeordneten Schopfschere (6), die eine obere und eine untere Messerwalze (7, 8) aufweist, dadurch gekennzeichnet, daß die Schopfschere (6) zwischen dem Fertiggerüst (2) und vorzugsweise dem hinteren Reversierhaspel (4) vorgesehen ist und daß auf der unteren Messerwalze (8) der Schopfschere (6) eine achsparallele Stützrolle (11) für das Walzgut drehbar gelagert ist.

2. Anlage nach Anspruch 1, dadurch gekennzeichnet, daß die Stützrolle (11) antreibbar gelagert ist.

3. Anlage nach Anspruch 1 und 2, dadurch gekennzeichnet, daß die Stützrolle (11) über eine Gelenkwelle (12) mit einer zur Messerwalze (8) koaxialen Antriebswelle verbunden ist.

## Claims

1. A plant for hot-rolling strip or plate stock comprising at least one reversible finishing stand (2), which is provided between forward and rear reversing coilers (3, 4), and comprising cropping shears (6), which are aligned with the reversing coilers (3, 4) and the finishing stand (2) and comprise upper and lower cylindrical cutters (7, 8), characterized in that the cropping shears (6) are disposed between the finishing stand (2) and preferably the rear reversing coiler (4) and a backing roller (11) for supporting the stock to be rolled is rotatably mounted on the lower cylindrical cutter (8) of the cropping shears (6) and is axially parallel thereto.

2. A plant according to claim 1, characterized in that the backing roller (11) is movably mounted and adapted to be driven.

3. A plant according to claims 1 and 2, characterized in that the backing roller (11) is connected by a universal joint shaft (12) to a drive shaft, which is coaxial to the cylindrical cutter (8).

## Revendications

1. Installation pour le laminage à chaud d'un produit à laminer en forme de bande ou de plaque, munie d'au moins une cage finisseuse réversible (21) prévue entre une bobineuse réversible antérieure et une bobineuse réversible postérieure (3, 4) et d'une cisaille à ébouter (6) disposée sur la même ligne que les bobineuses réversibles (3, 4) et la cage finisseuse (2) et qui présente un rouleau porte-lame supérieur et un rouleau porte-lame inférieur (7, 8),

caractérisée par le fait que la cisaille à ébouter (6) est prévue entre la cage finisseuse (2) et la bobineuse réversible de préférence postérieure (4) et que sur le rouleau porte-lame inférieur (8) de la cisaille à ébouter (6) est monté de manière à pouvoir tourner un rouleau de soutien (11) destiné au produit à laminer.

2. Installation selon la revendication 1, caractérisée par le fait que le rouleau de soutien (11) est monté de manière à pouvoir étre entraîné.

3. Installation selon les revendications 1 et 2, caractérisée par le fait que le rouleau de soutien (11) est relié, par l'intermédiaire d'un arbre articulé (12), à un arbre d'entraînement coaxial au rouleau porte-lame (8).

FIG.1

0 088 201

*FIG. 2*

*FIG. 3*